(19) Europäisches Patentamt
European Patent Office
Office européen des brevets

(11) **EP 4 806 945 A1**

(12) **EUROPEAN PATENT APPLICATION**
published in accordance with Art. 153(4) EPC

(43) Date of publication:
**16.09.2026 Bulletin 2026/38**

(21) Application number: **24903268.1**

(22) Date of filing: **13.09.2024**

(51) International Patent Classification (IPC):
***C08J 5/18*** *(2006.01)* ***B32B 27/32*** *(2006.01)*
***B65D 65/40*** *(2006.01)*

(52) Cooperative Patent Classification (CPC):
**B32B 27/32; B65D 65/40; C08J 5/18**

(86) International application number:
**PCT/JP2024/032908**

(87) International publication number:
**WO 2025/126605 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.12.2023 JP 2023209398**

(71) Applicant: **C.I. TAKIRON Corporation**
**Kita-Ku**
**Osaka-Shi**
**Osaka 530-0001 (JP)**

(72) Inventors:
- **SASAHARA Kazufusa**
  **Osaka-shi, Osaka 530-0001 (JP)**
- **MORI Keiichi**
  **Osaka-shi, Osaka 530-0001 (JP)**
- **OSHIMA Hiroyuki**
  **Osaka-shi, Osaka 530-0001 (JP)**

(74) Representative: **advotec.**
**Patent- und Rechtsanwaltspartnerschaft mbB**
**Widenmayerstraße 4**
**80538 München (DE)**

(54) **BASE MATERIAL FILM FOR PACKAGING FILM**

(57) A base film (F) is configured to be laminated with a sealant film to form a packaging film. The base film (F) includes a stretched film including at least one base layer ($L_{P1}$, $L_{P2}$) containing, as a main component, high-density polyethylene having a density of 0.95 g/cm$^3$ or more and a molecular weight distribution of 3.0 (Mw/Mn).

FIG.1

F
Lp2
La2
LB
La1
Lp1



Processed by Luminess, 75001 PARIS (FR)

## Description

TECHNICAL FIELD

The present invention relates to base films used to form various types of packaging films.

BACKGROUND ART

Films for forming packaging bags, such as pouches and gusset bags, used for packaging daily necessities, food products, and the like (so-called packaging films) have been enhanced in functionality by laminating films made of the following different materials:

- base film: serves to improve strength and serves as a printing substrate, and is made of nylon, polyester, polypropylene, or the like;
- barrier film: serves to block oxygen, water vapor, light, and the like, and includes films made of a barrier resin such as EVOH (ethylene-vinyl alcohol copolymer), and synthetic resin films on which inorganic materials such as metals including aluminum or oxides thereof are vapor-deposited; and
- sealant film: serves to heat-seal (thermally fuse) films to each other, and is made of low-density polyethylene, linear low-density polyethylene, or the like.

In recent years, reduction in environmental impact has been demanded for plastic products in general, and recyclability has also been demanded for packaging films. However, laminate films made of different materials as described above exhibit poor recyclability due to the difficulty in separating the individual constituent layers. Accordingly, a method of using a single resin material has been proposed as a means for improving recyclability. In view of the fact that polyethylene is most widely used for packaging materials, packaging films with excellent recyclability have been developed in which both the sealant film and the base film are made of polyethylene, as disclosed in Patent Document 1.

However, packaging films in which both the sealant film and the base film are made of polyethylene as in Patent Document 1 exhibit insufficient mechanical strength. Consequently, positional misalignment (so-called print misregistration) tends to occur during printing. In order to avoid such print misregistration, a method has also been proposed in which a uniaxially stretched film made of polyethylene is used as a base film, as disclosed in Patent Document 2.

CITATION LIST

PATENT DOCUMENTS

PATENT DOCUMENT 1: Japanese Unexamined Patent Publication No. 2022-053859
PATENT DOCUMENT 2: Japanese Unexamined Patent Publication No. 2020-055162

SUMMARY OF THE INVENTION

TECHNICAL PROBLEM

However, the packaging film of Patent Document 2 uses medium-density polyethylene as a raw material for the base film. Accordingly, although the packaging film has puncture resistance, the difference between the heat resistance temperature of the base film and the melting temperature of the sealant film is small, resulting in insufficient heat resistance of the base film. Consequently, wrinkling occurs during the heat sealing process in bag making. In addition, although a uniaxially stretched film is used as the base film, the rigidity of the base film is not sufficient, and positional misalignment (that is, print misregistration) may occur due to elongation resulting from stress during the printing process.

An object of the present invention is to address the issues associated with conventional base films for packaging films, such as that in Patent Document 2, and to provide a base film for a packaging film that not only has excellent recyclability but also can achieve both heat resistance that suppresses wrinkling during heat sealing in bag making and puncture resistance that suppresses the occurrence of pinholes, while reducing the occurrence of print misregistration caused by elongation during the printing process.

SOLUTION TO THE PROBLEM

Among the inventions, the invention of claim 1 is a base film configured to be laminated with a sealant film to provide a packaging film. The base film includes a stretched film including at least one base layer containing, as a main component (that is, in an amount of 50 mass% or more in the entire base layer), high-density polyethylene having a density of 0.95 g/cm$^3$ or more and a molecular weight distribution of 3.0 (Mw/Mn) or less. The high-density polyethylene having a density of 0.95 g/cm$^3$ or more is hereinafter referred to as "specific high-density polyethylene."

The "Mw/Mn" means the ratio of the weight-average molecular weight (Mw) to the number-average molecular weight (Mn) (molecular weight distribution), and Mw and Mn of polyethylene represent values equivalent to polystyrene obtained by gel permeation chromatography (GPC) measurement.

According to the invention of claim 2, in the invention of claim 1, the base layer contains 90 mass% or more of the high-density polyethylene.

The invention of claim 3 is a barrier base film including: two of the base layers according to claim 1 or 2, the two base layers being made of the high-density polyethylene having a molecular weight distribution of 3.0 (Mw/Mn) or less, and provided on front and back sides of the barrier base film; and a barrier layer made of a barrier resin and interposed between the two base layers.

According to the invention of claim 4, in the invention of claim 3, the barrier resin contains an ethylene-vinyl alcohol copolymer as a main component.

The invention of claim 5 includes: the base film according to claim 1 or 2; and a vapor-deposited layer provided on one surface of the base film.

The invention of claim 6 includes: the base film according to claim 1 or 2; and a coating layer provided on one surface of the base film.

The invention of claim 7 includes: the barrier base film according to claim 3; and a sealant film laminated on one of the base layers of the barrier base film.

ADVANTAGES OF THE INVENTION

The base film for a packaging film according to claim 1 (hereinafter simply referred to as "base film") is made of polyethylene. Therefore, there is no need to separate the individual constituent layers when disposing of a packaging film in which a polyethylene sealant film is laminated. Accordingly, the base film is excellent in recyclability. Since the base film according to claim 1 includes a base layer containing, as a main component, the specific high-density polyethylene having a density of 0.95 g/cm$^3$ or more, it has excellent mechanical strength and rigidity, and print misregistration caused by elongation during the printing process can be suppressed. In addition, since the base film according to claim 1 contains, as a main component, the specific high-density polyethylene having a density of 0.95 g/cm$^3$ or more, it has excellent heat resistance, and wrinkling caused by heat sealing during bag making can be suppressed. Further, since the base film according to claim 1 contains, as a main component, the specific high-density polyethylene having a very narrow molecular weight distribution, it has high puncture strength and is thus excellent in puncture resistance, and the occurrence of pinholes can be suppressed.

The base film according to claim 2 has a high proportion of the specific high-density polyethylene with a very narrow molecular weight distribution in the base layer. Therefore, the base film exhibits excellent recyclability and can be remelted and reprocessed. Furthermore, it is possible to highly effectively suppress the occurrence of print misregistration caused by elongation during the printing process and wrinkling caused by heat sealing, and the occurrence of pinholes.

The barrier base film according to claim 3 includes a barrier layer made of a barrier resin and interposed between two front and back base layers, each made of the specific high-density polyethylene with a very narrow molecular weight distribution. Therefore, high barrier properties (properties that suppress permeation of gases such as oxygen and water vapor) can be imparted to a packaging bag after bag making.

In the barrier base film according to claim 4, since the barrier resin contains an ethylene-vinyl alcohol copolymer as a main component, very high barrier properties can be imparted to a packaging bag after bag making without impairing recyclability.

The barrier base film according to claim 5 includes a vapor-deposited layer on one surface of the base film. Therefore, extremely high barrier properties can be imparted to a packaging bag after bag making without impairing recyclability.

The barrier base film according to claim 6 includes various coating layers on one surface of the base film. Therefore, extremely high barrier properties can be imparted to a packaging bag after bag making without impairing recyclability.

In the packaging film according to claim 7, a sealant film is laminated on one of the base layers of the barrier base film. Therefore, a packaging bag can be easily formed.

BRIEF DESCRIPTION OF THE DRAWINGS

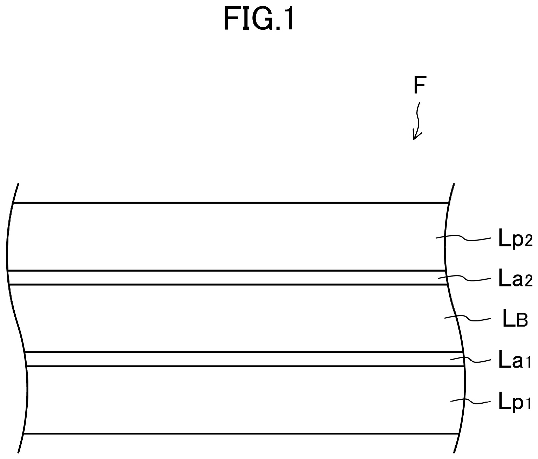

[FIG. 1] An illustration (vertical sectional view) showing a layer structure of a barrier base film.

DESCRIPTION OF EMBODIMENTS

The base film according to the present invention is composed of a stretched film including a base layer containing, as a main component, specific high-density polyethylene having a very narrow molecular weight distribution (that is, a molecular weight distribution of 3.0 (Mw/Mn) or less), (i.e., containing, as a main component, the high-density polyethylene having a density of 0.95 g/cm$^3$ or more). That is, the inventors of the present invention have found that the issues associated with conventional polyethylene-based monomaterial base films, that is, print misregistration caused by elongation during the printing process and wrinkling caused by heat sealing during bag making are associated with the density of the polyethylene material, and the occurrence of pinholes is associated with the molecular weight distribution of the polyethylene material. The inventors have arrived at the present invention based on the finding that the occurrence of print misregistration and wrinkling can be eliminated and the occurrence of pinholes can be suppressed by specifying these properties of the polyethylene material to be within predetermined numerical ranges.

The base film according to the present invention may be composed of a stretched film made of a synthetic resin containing the specific high-density polyethylene as a main component, and may have a heat shrinkage rate at 120°C and a puncture strength adjusted to fall within predetermined numerical ranges. That is, the inventors of the present invention have found that print misregistration caused by elongation during the printing process, wrinkling caused by heat sealing during bag making, and the occurrence of pinholes are associated with the density of the polyethylene material and the heat shrinkage rate and puncture strength of the base film. The inventors have also found that, by specifying the density of the polyethylene material and the physical property values of the heat shrinkage rate and puncture strength of the base film to be within predetermined numerical ranges, it is possible to eliminate the occurrence of print misregistration and wrinkling and suppress the occurrence of pinholes, both with higher accuracy.

The base film according to the present invention needs to include a base layer containing, as a main component, specific high-density polyethylene (that is, high-density polyethylene having a density of 0.95 g/cm$^3$ or more). When the density of the polyethylene is 0.95 g/cm$^3$ or more, the crystallinity of the polyethylene is improved. Therefore, the film can be stretched at a higher stretch ratio, whereby the mechanical strength (tensile modulus) is improved, and print misregistration caused by elongation during the printing process is suppressed. In addition, when the density of the polyethylene is 0.95 g/cm$^3$ or more, stretching at a high temperature becomes possible, whereby heat resistance is improved and wrinkling caused by heat sealing during bag making is suppressed. When the content of the specific high-density polyethylene in the base layer is less than 50 mass%, or when the density of the high-density polyethylene in the base layer is less than 0.95 g/cm$^3$, the stretch ratio and the stretching temperature cannot be increased, and the mechanical strength and heat resistance of the base film become insufficient, which is undesirable. The content of the specific high-density polyethylene in the base layer is preferably 70 mass% or more, more preferably 90 mass% or more, and particularly preferably 95 mass% or more.

Examples of methods for obtaining the specific high-density polyethylene (that is, high-density polyethylene having a density of 0.95 g/cm$^3$ or more) include polymerization methods (constant-pressure methods) using a Ziegler-Natta catalyst, a metallocene catalyst, or the like. Polymerization using a metallocene catalyst results in a uniform active site structure, thereby making it possible to produce a polymer having a narrow molecular weight distribution and a reduced amount of low-molecular-weight components. The density of the specific high-density polyethylene is not particularly limited as long as it is 0.95 g/cm$^3$ or more, but is preferably 0.97 g/cm$^3$ or less. This is because when the density exceeds 0.97 g/cm$^3$, the polyethylene becomes hard and prone to tearing, which may make it difficult to produce a stretched film. In addition, the density of the specific high-density polyethylene, which is the main raw material, is more preferably 0.955 g/cm$^3$ or more, and particularly preferably 0.962 g/cm$^3$ or more.

When the puncture strength is to be increased mainly by adjusting the properties of the polyethylene material, it is necessary to adjust the molecular weight distribution of the specific high-density polyethylene in the resin material to 3.0 (Mw/Mn) or less. When the molecular weight distribution of the specific high-density polyethylene in the resin material exceeds 3.0 (Mw/Mn), the puncture strength of the base film becomes insufficient, which is undesirable. From the viewpoint of improving the puncture strength, the molecular weight distribution of the specific high-density polyethylene in the resin material is more preferably 2.7 (Mw/Mn) or less, and particularly preferably 2.5 (Mw/Mn) or less. Although a narrower molecular weight distribution of the specific high-density polyethylene in the resin material is more preferable, the lower limit is considered to be about 2.0 (Mw/Mn) in view of the production method of high-density polyethylene.

The melting point of the specific high-density polyethylene is preferably in the range of 130 to 140°C, and more preferably 132 to 140°C. When the melting point is lower than 130°C, stretching cannot be performed at a temperature equal to or higher than a stretching temperature (120°C) described later, and the heat resistance of the stretched film may decrease. The term "melting point" as used herein refers to a value measured in accordance with JIS K 7121:1987, and is

obtained by measuring the temperature at which the main endothermic peak appears using a differential scanning calorimeter (DSC).

The melt mass flow rate (MFR) of the specific high-density polyethylene is preferably 0.01 to 3.00 g/10 min, more preferably 0.02 to 2.50 g/10 min, and still more preferably 0.1 to 2.00 g/10 min. From the viewpoint of improving the puncture strength, a melt mass flow rate (MFR) of 1.0 g/10 min or less is particularly preferable, since a lower melt mass flow rate (MFR) results in a higher molecular weight and an increased degree of entanglement of molecular chains. When the melt mass flow rate (MFR) is 0.01 g/10 min or more, the specific high-density polyethylene can be extruded by a general-purpose extruder without using special equipment, and when the melt mass flow rate (MFR) is 3.00 g/10 min or less, sufficient film strength can be achieved. The melt mass flow rate is obtained by measurement in accordance with JIS K 7210:1999.

In order to specify the heat shrinkage rate at 120°C, puncture strength, and tensile modulus of the base film made of the specific high-density polyethylene to be within predetermined numerical ranges, it is necessary to stretch an unstretched film (primary film) made of the specific high-density polyethylene, and a method in which stretching is performed at a higher stretching temperature than that typically used can be suitably used. Further, the stretching direction is not particularly limited, and may be the machine direction (MD) or the transverse direction (TD) (biaxial stretching in MD and TD is also possible). The stretch ratio is also not particularly limited, but in the case of uniaxial stretching, it is preferable to stretch the film to more than about 4 times to 10 times in the machine direction or the transverse direction, and in the case of biaxial stretching, it is preferable to stretch the film to more than about 4 times to 10 times in each of the machine direction and the transverse direction. By stretching the film at the above stretch ratio, the mechanical strength (tensile modulus) of the base film are improved, and print misregistration caused by elongation during the printing process can be suppressed. In the case of uniaxial stretching, when the stretch ratio is 3 or less, the film may not be stretched uniformly, resulting in uneven stretching. Conversely, when the stretch ratio is greater than 10, the film may break. In the case of uniaxial stretching, the stretch ratio is more preferably 6 or more from the viewpoint of improving mechanical strength (tensile modulus). In order to stretch the film to more than 4 times to 10 times in uniaxial stretching, it is preferable to use specific high-density polyethylene having a density of 0.95 g/cm$^3$ or more. When polyethylene having a density of less than 0.95 g/cm$^3$ is used, stretching at a stretch ratio of more than 4 may be difficult. As a method for stretching in the machine direction, a method in which the take-up rolls are operated at different rotational speeds can be suitably used, and as a method for stretching in the transverse direction, a method in which the left and right sides of the unstretched film are gripped in a tenter and the film is expanded in the transverse direction can be suitably used.

The stretching temperature for obtaining the above stretched film is not particularly limited, but from the viewpoint of improving dimensional stability achieved by heat treatment and obtaining a film with excellent heat resistance, the stretching temperature is preferably 120°C or more and less than 130°C, which is a higher temperature range than that typically used for polyethylene films. When the stretching temperature is lower than 120°C, both dimensional stability achieved by heat treatment and heat resistance decrease. Consequently, wrinkling tends to occur when the base film is heat-sealed during bag making, which is undesirable. Conversely, when the stretching temperature is 130°C or higher, melt fracture occurs during film formation, resulting in a reduced yield, which is undesirable. The stretching temperature is more preferably 125°C or more and less than 130°C, and particularly preferably 127°C or more and less than 130°C. When the stretching temperature is 125°C or more, it is preferable to use specific high-density polyethylene having a density of 0.95 g/cm$^3$ or more. When the density is less than 0.95 g/cm$^3$, stretching at 125°C or higher may be difficult.

As described above, although the mechanical strength (tensile modulus) is improved by stretching, stretching the film makes heat shrinkage more likely to occur, and wrinkling tends to occur due to heat sealing during bag making. Accordingly, in order to suppress the occurrence of print misregistration and wrinkling and the occurrence of pinholes by specifying the heat shrinkage rate in the stretching direction at 120°C and the puncture strength of the base film (stretched film) made of the specific high-density polyethylene to be within predetermined numerical ranges, it is preferable that the heat shrinkage rate of the base film in the stretching direction at 120°C be less than 5%. When the heat shrinkage rate of the base film in the stretching direction at 120°C is 5% or more, wrinkling tends to occur during heat sealing in bag making, which is undesirable. A lower heat shrinkage rate in the stretching direction at 120°C is more preferable. Specifically, the heat shrinkage rate in the stretching direction at 120°C is more preferably 3% or less, still more preferably less than 2%, and particularly preferably less than 1%. When it is less than 0% (that is, when the film elongates at 120°C), wrinkling is instead likely to occur during heat sealing, which is undesirable.

As described above, although mechanical strength (tensile modulus) is improved by stretching, puncture resistance (puncture strength) decreases. Thus, there is a trade-off between mechanical strength (tensile modulus) and puncture resistance (puncture strength). Accordingly, the puncture strength of the base film is preferably 2.0 N or more. When the puncture strength of the base film is less than 2.0 N, puncture resistance tends to be insufficient, which is undesirable. The puncture strength of the base film is more preferably 2.5 N or more, and particularly preferably 3.0 N or more. Although a higher puncture strength of the base film is more preferable, the upper limit is considered to be about 5.0 N in view of the properties of the specific high-density polyethylene, which is the main raw material. In order for the base film made of the specific high-density polyethylene to have a puncture strength of 2.0 N or more, it is preferable that the

molecular weight distribution of the specific high-density polyethylene be 3.0 (Mw/Mn) or less. When uniaxial stretching is performed, anisotropy becomes significant and the puncture strength decreases. However, by setting the molecular weight distribution to 3.0 (Mw/Mn) or less, the degree of entanglement of molecular chains is increased, whereby the puncture strength can be improved.

As described above, although the mechanical strength (tensile modulus) is improved by stretching, stretching the film makes heat shrinkage more likely to occur, and wrinkling tends to occur due to heat sealing during bag making. Accordingly, in a case where both print misregistration and wrinkling are suppressed by specifying the heat shrinkage rate in the stretching direction at 120°C and the tensile modulus of the base film made of the specific high-density polyethylene to be within predetermined numerical ranges, the tensile modulus of the base film is preferably 2,000 MPa or more, and more preferably 2,500 MPa or more, and particularly preferably 3,000 MPa or more. When the tensile modulus of the base film is less than 2,000 MPa, print misregistration tends to occur during the printing process, which is undesirable. Although a higher tensile modulus of the base film is more preferable, the upper limit is considered to be about 5,000 MPa in view of the properties of the specific high-density polyethylene, which is the main raw material.

The base film preferably has a storage modulus at 100°C of 400 MPa or more, more preferably 500 MPa or more, still more preferably 600 MPa or more, and particularly preferably 700 MPa or more. When the storage modulus of the base film at 100°C is less than 400 MPa, print misregistration tends to occur during the printing process, which is undesirable. Although a higher storage modulus of the base film at 100°C is more preferable, the upper limit is considered to be about 1500 MPa in view of the properties of the specific high-density polyethylene, which is the main raw material.

The base film according to the present invention includes a base layer having a single-layer structure and made of the specific high-density polyethylene described above. For example, a film in which a barrier resin layer (that is, a layer made of a barrier resin) is interposed between base layers made of the specific high-density polyethylene described above, or a film in which a barrier resin layer is laminated on one or both surfaces of a base layer made of the specific high-density polyethylene, is referred to as a barrier base film. The barrier resin in the present invention means a resin having a function to suppress the permeation of gases such as oxygen and water vapor. As such a barrier resin, an ethylene-vinyl alcohol copolymer (EVOH), polyvinyl alcohol, a derivative thereof, or the like can be suitably used.

In a case where a barrier resin layer is interposed between base layers made of the specific high-density polyethylene, or in a case where a barrier resin layer is laminated on one or both surfaces of a base layer made of the specific high-density polyethylene, an adhesive layer may be provided between the barrier resin layer and the base layer made of the specific high-density polyethylene. Interposing such an adhesive layer can more effectively suppress delamination between the barrier resin layer and the base layer made of the specific high-density polyethylene. As such an adhesive, acid-modified polyethylene, acid-modified polypropylene, or the like can be suitably used. However, from the standpoint of a monomaterial structure, acid-modified polyethylene is preferred. In the base film according to the present invention, in the case where another layer such as a barrier resin layer is interposed between base layers made of the specific high-density polyethylene or in the case where another layer such as a barrier resin layer is laminated on either or both of the front and back surfaces of a base layer made of the specific high-density polyethylene as described above, it is preferable from the viewpoint of improving recyclability that the barrier base film contain 70 mass% or more of the specific high-density polyethylene, and more preferably 74 mass% or more of the specific high-density polyethylene.

As a method for producing the base film, a raw material containing the specific high-density polyethylene described above is mixed at a predetermined blending ratio, and formed into a film by melt extrusion using an extruder equipped with a T-die, thereby preparing a primary film before stretching of the base film.

As a method for producing a barrier base film including a barrier resin layer between two front and back base layers made of the specific high-density polyethylene, the resins used for the base layers, the barrier resin layer, and the adhesive layers are prepared, and the resins for these layers are coextruded by a multilayer extruder equipped with a T-die, thereby preparing a primary film before stretching of the barrier base film.

A stretched base film or a stretched barrier base film is obtained by subjecting the produced primary film before stretching of the base film or the barrier base film to uniaxial stretching under the stretching conditions described above.

The thickness of the primary film before stretching is preferably 50 to 300 μm, more preferably 80 to 250 μm, and particularly preferably 100 to 200 μm. When the thickness of the primary film is 50 μm or more, strength sufficient to withstand stress during stretching can be obtained. When the thickness of the primary film of the base film is 300 μm or less, sufficient transparency can be achieved after stretching.

The thickness of the base layer in the stretched base film and in the stretched barrier base film is preferably 10 to 40 μm, more preferably 15 to 35 μm, and particularly preferably 20 to 30 μm.

The thickness of the barrier resin layer of the stretched barrier base film is preferably 1 to 8 μm, more preferably 2 to 6 μm, and particularly preferably 2.5 to 5.0 μm. When the thickness of the barrier resin layer after stretching is 1 μm or more, sufficient oxygen and water vapor barrier properties for a barrier film can be obtained. When the thickness of the barrier resin layer after stretching is 8 μm or less, a film excellent in recyclability can be obtained.

The thickness of the adhesive layer of the stretched barrier base film is not particularly limited, but is preferably 0.3 to 2 μm, and more preferably 0.5 to 1.5 μm.

The base film and the barrier base film according to the present invention are used to form a packaging film (that is, a film for forming a packaging bag) by laminating a sealant film on one surface of the base film or the barrier base film. The packaging films are then laminated together such that the sealant film surfaces are joined, and the resulting laminate film is cut into a predetermined shape and heat-sealed at the periphery to form a pouch, a gusset bag, a two-side-sealed bag, a three-side-sealed bag, or the like. As the sealant film to be laminated to the base film according to the present invention, low-density polyethylene (LDPE), linear low-density polyethylene (LLDPE), medium-density polyethylene, or the like can be suitably used. From the viewpoint of improving heat sealability, however, low-density polyethylene (LDPE) or linear low-density polyethylene (LLDPE) is preferred, since each of these have a lower melting point than the base film and thus provides a difference in melting point from the base film.

In addition, the base film according to the present invention may be used as a packaging film by laminating, as necessary, on the surface of the base film opposite to the side to which the sealant film is bonded, a barrier resin layer, a printing layer, a vapor-deposited layer made of a metal such as aluminum oxide, a metal oxide such as silicon dioxide, or an inorganic compound, or a base layer made of commonly used polyethylene (such as low-density polyethylene (LDPE), linear low-density polyethylene (LLDPE), medium-density polyethylene, or high-density polyethylene). In addition, in a case where a vapor-deposited layer made of a metal such as aluminum oxide, a metal oxide such as silicon dioxide, or an inorganic compound is laminated on one surface (or both surfaces) of the base film according to the present invention, it is preferable to provide, between the vapor-deposited layer and the base film, an anchor coating layer made of, for example, a mixture of a urethane-based resin, a curing agent, and a silane coupling agent, in order to improve adhesion of the vapor-deposited layer.

The base film according to the present invention may be used as a packaging film by providing, as necessary, a coating layer between the sealant film and the base film. The coating layer is made of a barrier resin. The barrier resin means a resin having a function to suppress the permeation of gases such as oxygen and water vapor. As such a barrier resin, an ethylene-vinyl alcohol copolymer (EVOH), polyvinyl alcohol, a derivative thereof, or the like can be suitably used.

The melting point of the base film (after stretching) made of the specific high-density polyethylene is preferably 135°C or higher. When the melting point of the base film is 135°C or higher, the difference in melting point from the sealant film can be increased, and heat shrinkage of the base film during heat sealing can therefore be suppressed.

## Examples

The base film according to the present invention will now be described in more detail based on Examples. However, the present invention is not limited in any way to the forms of such Examples, and may be modified as appropriate without departing from the spirit of the present invention. The methods for evaluating the properties in the Examples and Comparative Examples are as follows.

### <Heat Shrinkage Rate at 120°C>

A sample of a predetermined size (12 cm × 12 cm) was cut from the stretched film prepared in each of the Examples and Comparative Examples. Orthogonal gauge lines, each having a length of 10 cm, were marked on the sample so as to be parallel to the respective edges of the sample and located 1 cm inward from the respective edges. The sample was placed in an oven at 120°C and heated for 10 minutes, and then removed and cooled to room temperature (about 25°C). The distance between the gauge lines in the stretching direction (i.e., MD) was measured for the heat-treated sample. The heat shrinkage rate (%) in the stretching direction was calculated from the change in the distance between the gauge lines before and after heating, using the following equation (1).
[Equation 1]

Heat shrinkage rate (%) in stretching direction = [(distance between gauge lines before heating - distance between gauge lines after heating)/distance between gauge lines before heating] × 100 . . (1) (1)

### <Puncture Strength>

In accordance with "7.4 Puncture Strength Test" specified in "General Rules for Plastic Films for Food Packaging)" of JIS Z 1707, a needle having a diameter of 1.0 mm and a tip radius of 0.5 mm (φ1.0 mm × 0.5 mmR) was driven into the stretched film prepared in each of the Examples and Comparative Examples at a puncture speed of 50 mm/min, and the strength at the time when the needle penetrated the stretched film was measured. The strength (N) when punctured from the surface side was measured five times (n = 5), and the average value was calculated.

<Puncture Resistance>

Puncture resistance was evaluated based on the above puncture strength.

◎: 3 N or more
◦: 2 N or more and less than 3 N
×: less than 2 N

<Tensile Modulus>

A stretched film prepared in each of the Examples and Comparative Examples was cut into a strip-shaped test specimen having a length of 200 mm in the machine direction (MD) and a width of 10 mm in the transverse direction (TD). Then, using a tensile tester (AUTOGRAPH (registered trademark) AG-5000A manufactured by Shimadzu Corporation), the test specimen was pulled in the machine direction (MD) under an atmosphere of 25°C and 65% RH (i.e., a normal temperature and humidity environment) with a grip separation of 80 mm at a tensile speed of 10 mm/min, in accordance with JIS K 7127. The tensile modulus (MPa) was calculated as the ratio of tensile stress to the corresponding strain, based on two points in a strain range of 0 to 1%.

<Appearance After Printing>

A packaging film was prepared by bonding (laminating) a 100-μm-thick linear low-density polyethylene (LLDPE) film as a sealant film to one surface of the base film prepared in each of the Examples and Comparative Examples. Using a gravure printing machine equipped with a gravure roll and a doctor blade, a commercially available gravure printing ink was printed on the surface of the packaging film opposite to the sealant film under predetermined conditions (printing speed = 75 m/min, drying temperature = 70°C, and contact pressure of the nip roll against the base film = 0.15 MPa). The printed surface was then subjected to a visual sensory evaluation according to the following three grades.

◦: No print misregistration observed
△: Slight print misregistration observed
×: Distinct print misregistration observed

<Appearance After Heat Sealing>

A packaging film was prepared by bonding (laminating) a 100-μm-thick linear low-density polyethylene (LLDPE) film as a sealant film to one surface of the base film prepared in each of the Examples and Comparative Examples. The packaging films thus obtained were then laminated together such that the sealant films are joined. The resulting laminate film was heat-sealed at a temperature of about 120°C using a heat sealer. The heat-sealed surface was then subjected to a visual sensory evaluation according to the following four grades.

◎: No wrinkling observed
◦: Almost no wrinkling observed
△: Slight but acceptable wrinkling observed
×: Distinct wrinkling observed

The resin materials used to prepare the stretched films in the Examples and Comparative Examples were as follows.

- HDPE1: High-density polyethylene (density: 0.954 g/cm$^3$, molecular weight distribution (Mw/Mn) = 2.6, melting point: 134°C, MFR (melt flow rate measured by a method in accordance with JIS K 7210; the same applies hereinafter): 1.0 g/10 min, NEO-ZEX 5510F manufactured Prime Polymer Co., Ltd.)
- HDPE2: High-density polyethylene (density: 0.960 g/cm$^3$, molecular weight distribution (Mw/Mn) = 8.7, melting point: 135°C, MFR: 1.0 g/10 min, NOVATEC HY540 manufactured by Japan Polyethylene Corporation)
- MDPE: Medium-density polyethylene (density: 0.943 g/cm$^3$, molecular weight distribution (Mw/Mn) = 22.4, melting point: 126°C, MFR: 0.24 g/10 min, HI-ZEX 5100E manufactured by Prime Polymer Co., Ltd.)

[Example 1]

<Preparation of Base Film>

The above high-density polyethylene HDPE1 (i.e., specific high-density polyethylene having a molecular weight distribution (Mw/Mn) of 2.6 and a density of 0.954 g/cm$^3$) was continuously formed into a film by melt extrusion at a temperature of 200°C using an extruder equipped with a T-die (manufactured by Labtech Engineering Company Ltd.), and the resulting long film was wound onto a take-up roll while being cooled by the take-up roll, thereby preparing an unstretched film (primary film) having a thickness of about 152 μm. The unstretched film was then stretched to 6.0 times in the machine direction (MD) while being heated to 127°C, thereby preparing a uniaxially stretched polyethylene film (that is, a base film) having a thickness of about 25 μm.

Then, using the prepared base film, the heat shrinkage rate at 120°C, the tensile modulus, and the puncture strength were measured by the methods described above. Further, using the prepared base film, the appearance after printing, the appearance after heat sealing, and the puncture resistance were evaluated by the methods described above. The measurement results and evaluation results of the base film of Example 1 are shown in Table 1 together with the properties of the base film.

[Examples 2, 3, 4]

Uniaxially stretched polyethylene films (i.e., base films) of Examples 2, 3, and 4 were prepared in the same manner as in Example 1 except that the stretching temperature in stretching the unstretched film (primary film) in the machine direction (MD) was changed to 125°C, 120°C, and 128°C, respectively. Then, using the prepared base films, the heat shrinkage rate at 120°C, the tensile modulus, and the puncture strength were measured by the methods described above, and the appearance after printing, the appearance after heat sealing, and the puncture resistance were evaluated by the methods described above. The measurement results and evaluation results of the base films of Examples 2, 3, and 4 are shown in Table 1 together with the properties of the base films.

[Examples 5, 6]

Uniaxially stretched polyethylene films (i.e., base films) of Examples 5, 6 were prepared in the same manner as in Example 1 except that the stretch ratio in stretching the unstretched film (primary film) in the machine direction (MD) was changed to 5 and 10, respectively, and for Example 5, the stretching temperature was changed to 125°C. Then, using the prepared base films, the heat shrinkage rate at 120°C, the tensile modulus, and the puncture strength were measured by the methods described above, and the appearance after printing, the appearance after heat sealing, and the puncture resistance were evaluated by the methods described above. The measurement results and evaluation results of the base films of Examples 5, 6 are shown in Table 1 together with the properties of the base films.

[Example 7]

Using a multilayer extruder equipped with a T-die (manufactured by Labtech Engineering Company Ltd.), the following resins a to f were layered and continuously formed into a film by melt extrusion (extrusion temperature: 200°C), and the resulting long film was wound onto a take-up roll while being cooled by the take-up roll, thereby preparing an unstretched film (laminate film) having a thickness of about 157 μm and having a five-layer structure as shown in FIG. 1. The unstretched film was then stretched to 6.0 times in the machine direction (MD) while being heated to 127°C, thereby preparing a uniaxially stretched polyethylene film (i.e., a barrier base film) of Example 7 having a total thickness of about 25 μm. In the obtained barrier base film, the thicknesses of a first base layer ($L_{P1}$) made of HDPE1, a first adhesive layer ($L_{a1}$) made of acid-modified polyethylene, a barrier resin layer ($L_B$) made of an ethylene-vinyl alcohol copolymer, a second adhesive layer ($L_{a2}$) made of acid-modified polyethylene, and a second base layer ($L_{P2}$) made of HDPE1 were 9.3 μm, 1.5 μm, 3.3 μm, 1.5 μm, and 9.3 μm, respectively (therefore, the proportion of the specific high-density polyethylene in the entire barrier base film was 74.7 mass%).

a. HDPE1: High-density polyethylene (density: 0.954 g/cm$^3$, molecular weight distribution (Mw/Mn) = 2.6, melting point: 134°C, MFR: 1.0 g/10 min, NEO-ZEX 5510F manufactured Prime Polymer Co., Ltd.)
b. Acid-modified polyethylene: (density: 0.91 g/cm$^3$, melting point: 120°C, MFR: 2.3 g/10 min, ADMER NF587 manufactured by Mitsui Chemicals, Inc.)
c. Ethylene-vinyl alcohol copolymer: (density: 1.19 g/cm$^3$, melting point: 183°C, MFR: 1.6 g/10 min, ethylene content: 32 mol%, EVAL F171B manufactured by Kuraray Co., Ltd.)
d. Acid-modified polyethylene: (density: 0.91 g/cm$^3$, melting point: 120°C, MFR: 2.3 g/10 min, ADMER NF587 manufactured by Mitsui Chemicals, Inc.)
e. HDPE1: High-density polyethylene (density: 0.954 g/cm$^3$, molecular weight distribution (Mw/Mn) = 2.6, melting

point: 1343°C, MFR: 1.0 g/10 min, NEO-ZEX 5510F manufactured Prime Polymer Co., Ltd.)

Then, using the prepared barrier base film, the heat shrinkage rate at 120°C, the tensile modulus, and the puncture strength were measured by the methods described above, and the appearance after printing, the appearance after heat sealing, and the puncture resistance were evaluated by the methods described above. The measurement results and evaluation results of the base films of Example 7 are shown in Table 1 together with the properties of the base films.

[Comparative Example 1]

A uniaxially stretched polyethylene film (base film) of Comparative Example 1 was prepared in the same manner as in Example 1 except that the resin material was changed to HDPE2 (i.e., high-density polyethylene having a molecular weight distribution (Mw/Mn) of 8.7 and a density of 0.960 g/cm$^3$). Then, using the prepared base film, the heat shrinkage rate at 120°C, the tensile modulus, and the puncture strength were measured by the methods described above, and the appearance after printing, the appearance after heat sealing, and the puncture resistance were evaluated by the methods described above. The measurement results and evaluation results of the base films of Comparative Example 1 are shown in Table 1 together with the properties of the base films.

[Comparative Example 2]

A uniaxially stretched polyethylene film (base film) of Comparative Example 2 was prepared in the same manner as in Example 1 except that the resin material was changed to MDPE (i.e., medium-density polyethylene having a molecular weight distribution (Mw/Mn) of 22.4 and a density of 0.943 g/cm$^3$), the stretching temperature in stretching the unstretched film (primary film) in the machine direction (MD) was changed to 120°C, and the stretch ratio was changed to 4. Then, using the prepared base film, the heat shrinkage rate at 120°C, the tensile modulus, and the puncture strength were measured by the methods described above, and the appearance after printing, the appearance after heat sealing, and the puncture resistance were evaluated by the methods described above. The measurement results and evaluation results of the base film of Comparative Example 2 are shown in Table 1 together with the properties of the base film.

[Comparative Example 3]

An unstretched film (primary film) was prepared in the same manner as in Example 1 except that the thickness was adjusted to be about 26 μm. Then, using the prepared unstretched film, the heat shrinkage rate at 120°C, the tensile modulus, and the puncture strength were measured by the methods described above, and the appearance after printing, the appearance after heat sealing, and the puncture resistance were evaluated by the methods described above. The measurement results and evaluation results of the base film (i.e., the unstretched film) of Comparative Example 3 are shown in Table 1 together with the properties of the base film.

[Table 1]

| | Layer structure | Resin materials | | | Film-forming conditions | | | | Base film properties | | | | Evaluation | | | | |
|---|---|---|---|---|---|---|---|---|---|---|---|---|---|---|---|---|---|
| | | HDPE1 (d=0.954) (Mw/Mn=2.6) | HDPE2 (d=0.960) (Mw/Mn=8.7) | MDPE (d=0.943) (Mw/Mn=22.4) | Stretching conditions (MD) | | Thickness (μm) | | Specific HDPE content (%) | Heat shrinkage rate at 120°C (MD:%) | Tensile modulus (MD:MPa) | Puncture strength (N) | Film formability | Appearance after printing | Appearance after heat sealing | Puncture resistance | Overall evaluation |
| | | | | | Temperature (°C) | Ratio | Primary film | After stretching | | | | | | | | | |
| Example 1 | Single-layer | 100 | - | - | 127 | 6 | 152.2 | 24.8 | 100 | 0.6 | 2366 | 3.03 | Good | ○ | ◎ | ◎ | ◎ |
| Example 2 | Single-layer | 100 | - | - | 125 | 6 | 152.2 | 24.6 | 100 | 0.6 | 2926 | 2.17 | Good | ○ | ◎ | ○ | ○ |
| Example 3 | Single-layer | 100 | - | - | 120 | 6 | 152.2 | 25.2 | 100 | 0.7 | 2612 | 2.81 | Good | ○ | ◎ | ○ | ○ |
| Example 4 | Single-layer | 100 | - | - | 128 | 6 | 152.2 | 23.6 | 100 | 0.7 | 2520 | 2.81 | Good | ○ | ◎ | ○ | ○ |
| Example 5 | Single-layer | 100 | - | - | 125 | 5 | 130.0 | 27.0 | 100 | 0.9 | 2355 | 2.97 | Good | ○ | ◎ | ○ | ○ |
| Example 6 | Single-layer | 100 | - | - | 127 | 10 | 246.2 | 27.2 | 100 | 0.2 | 4396 | 2.00 | Good | ○ | ◎ | ○ | ○ |
| Example 7 | Multilayer* | 100 | - | - | 127 | 6 | 156.6 | 24.9 | 74.7 | 0.9 | 2919 | 3.71 | Good | ○ | ◎ | ◎ | ◎ |
| Comparative Example 1 | Single-layer | - | 100 | - | 127 | 6 | 151.4 | 24.0 | 100 | 0.7 | 3864 | 1.78 | Good | ○ | ◎ | × | × |
| Comparative Example 2 | Single-layer | - | - | 100 | 120 | 4 | 114.2 | 27.6 | 0 | 12.6 | 1788 | 2.48 | Good | △ | × | ○ | × |
| Comparative Example 3 | Single-layer | 100 | - | - | - | - | 26.4 | - | 100 | 1.7 | 771 | 1.46 | Opaque | × | ○ | × | × |

Multilayer*: Barrier base film including a layer containing an ethylene-vinyl alcohol copolymer

From Table 1, it can be seen that base films and barrier base films (streched films) that use the specific high-density polyethylene as a main raw material and satisfy the requirements of the present invention with respect to the molecular weight distribution do not cause print misregistration when a sealant film is laminated, exhibit a good appearance after heat sealing, and have good puncture resistance (Examples 1 to 7). In contrast, a base film using, as a main raw material, high-density polyethylene having a molecular weight distribution exceeding 3 (Mw/Mn) has a puncture strength of 2 N or less and exhibits low puncture resistance (Comparative Example 1). Further, a base film using medium-density polyethylene as a main raw material has a density of less than 0.950 g/cm$^3$, and therefore cannot be stretched to more than 4 times. The base film therefore has a tensile modulus of 2,000 MPa or less, resulting in print misregistration. In addition, since the density is less than 0.950 g/cm$^3$, the heat shrinkage rate exceeds 5%, and wrinkling tends to occur during heat sealing (Comparative Example 2). An unstretched base film has a tensile modulus of 2,000 MPa or less since it has not undergone stretching. Therefore, print misregistration tends to occur (Comparative Example 3).

INDUSTRIAL APPLICABILITY

Since the base film according to the present invention exhibits excellent effects as described above, it can suitably be used as materials for packaging films used to form various types of packaging bags.

DESCRIPTION OF REFERENCE CHARACTERS

F: Barrier base film
$L_{P1}$: First base layer made of specific high-density polyethylene
$L_{a1}$: First adhesive layer
$L_B$: Barrier resin layer
$L_{a2}$: Second adhesive layer
$L_{P2}$: Second base layer made of specific high-density polyethylene

## Claims

**1.** A base film for a packaging film, the base film being configured to be laminated with a sealant film to provide a packaging film, the base film comprising
a stretched film including at least one base layer containing, as a main component, high-density polyethylene having a density of 0.95 g/cm$^3$ or more and a molecular weight distribution of 3.0 (Mw/Mn) or less.

**2.** The base film for a packaging film according to claim 1, wherein
the base layer contains 90 mass% or more of the high-density polyethylene.

**3.** A barrier base film for a packaging film, the barrier base film comprising:

two of the base layers according to claim 1 or 2, the two base layers being provided on front and back sides of the barrier base film; and
a barrier layer made of a barrier resin and interposed between the two base layers,

**4.** The barrier base film for a packaging film according to claim 3, wherein
the barrier resin contains an ethylene-vinyl alcohol copolymer as a main component.

**5.** A barrier base film for a packaging film, the barrier base film comprising:

the base film according to claim 1 or 2; and
a vapor-deposited layer provided on one surface of the base film.

**6.** A barrier base film for a packaging film, the barrier base film comprising:

the base film according to claim 1 or 2; and
a coating layer provided on one surface of the base film.

**7.** A packaging film comprising:

the barrier base film according to claim 3; and
a sealant film laminated on one of the base layers of the barrier base film.

F
Lp2
La2
LB
La1
Lp1

**INTERNATIONAL SEARCH REPORT**

International application No. **PCT/JP2024/032908**

**A. CLASSIFICATION OF SUBJECT MATTER**

***C08J 5/18***(2006.01)i; ***B32B 27/32***(2006.01)i; ***B65D 65/40***(2006.01)i
FI: C08J5/18 CES; B32B27/32 E; B65D65/40 D

According to International Patent Classification (IPC) or to both national classification and IPC

**B. FIELDS SEARCHED**

Minimum documentation searched (classification system followed by classification symbols)

C08J5/00-5/02; C08J5/12-5/22; B32B1/00-43/00; B65D65/40; C08F10/02; B29C55/00-55/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-526654 A (DOW GLOBAL TECHNOLOGIES LLC) 19 September 2019 (2019-09-19) tables 2-4, paragraphs [0002], [0007], [0078], [0085] | 1-2, 5-6 |
| A | | 3-4, 7 |
| Y | JP 2015-063650 A (SEKISUI FILM KK) 09 April 2015 (2015-04-09) paragraph [0016] | 1-2, 5-6 |
| A | | 3-4, 7 |
| Y | JP 2022-039843 A (JAPAN POLYETHYLENE CORP.) 10 March 2022 (2022-03-10) claims, paragraphs [0001], [0039] | 1-2, 5-6 |
| A | | 3-4, 7 |
| A | JP 2019-111805 A (TOSOH CORP.) 11 July 2019 (2019-07-11) entire text | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (July 2022)

**INTERNATIONAL SEARCH REPORT**

International application No. **PCT/JP2024/032908**

**C. DOCUMENTS CONSIDERED TO BE RELEVANT**

| Category* | Citation of document, with indication, where appropriate, of the relevant passages | Relevant to claim No. |
|---|---|---|
| E, X | WO 2024/203194 A1 (PRIME POLYMER CO., LTD.) 03 October 2024 (2024-10-03) paragraphs [0041]-[0044], [0056]-[0058], examples 1-3, table 1 | 1-2, 5-6 |

Form PCT/ISA/210 (second sheet) (July 2022)

**INTERNATIONAL SEARCH REPORT**
**Information on patent family members**

International application No.
**PCT/JP2024/032908**

| Patent document cited in search report | Publication date (day/month/year) | Patent family member(s) | Publication date (day/month/year) |
|---|---|---|---|
| JP 2019-526654 A | 19 September 2019 | WO 2018/031392 A1 tables 2-4, paragraphs [0002], [0007], [0074], [0081] | |
| | | US 2019/0169385 A1 | |
| | | CA 3033234 A1 | |
| | | CN 109476860 A | |
| JP 2015-063650 A | 09 April 2015 | (Family: none) | |
| JP 2022-039843 A | 10 March 2022 | (Family: none) | |
| JP 2019-111805 A | 11 July 2019 | (Family: none) | |
| WO 2024/203194 A1 | 03 October 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022053859 A
- JP 2020055162 A